(19) Europäisches Patentamt / European Patent Office / Office européen des brevets

(11) **EP 4 191 814 A1**

(12) **DEMANDE DE BREVET EUROPEEN**

(43) Date de publication:
    **07.06.2023 Bulletin 2023/23**

(21) Numéro de dépôt: **22211217.9**

(22) Date de dépôt: **02.12.2022**

(51) Classification Internationale des Brevets (IPC):
    **H02J 3/32** (2006.01)    **H02J 3/46** (2006.01)
    **H02J 7/00** (2006.01)

(52) Classification Coopérative des Brevets (CPC):
    **H02J 3/466; H02J 3/32; H02J 7/0013;**
    **H02J 7/007182**

(84) Etats contractants désignés:
    **AL AT BE BG CH CY CZ DE DK EE ES FI FR GB
    GR HR HU IE IS IT LI LT LU LV MC ME MK MT NL
    NO PL PT RO RS SE SI SK SM TR**
    Etats d'extension désignés:
    **BA**
    Etats de validation désignés:
    **KH MA MD TN**

(30) Priorité: **03.12.2021 FR 2112962**

(71) Demandeur: **Electricité de France**
    **75008 Paris (FR)**

(72) Inventeurs:
    • **FREYTES, JULIAN**
      **78000 VERSAILLES (FR)**
    • **DZONLAGA, BOGDAN**
      **77940 NOISY RUDIGNON (FR)**

(74) Mandataire: **Regimbeau**
    **20, rue de Chazelles**
    **75847 Paris Cedex 17 (FR)**

(54) **PROCEDE DE PILOTAGE DE CHARGE ET DE DECHARGE D'UNE PLURALITE DE DISPOSITIFS DE STOCKAGE D ENERGIE ELECTRIQUE**

(57) L'invention concerne un procédé de pilotage de charge et de décharge d'une pluralité de dispositifs de stockage d'énergie électrique raccordés à un point de raccordement commun (PCC) d'un réseau de distribution électrique, en fonction d'une variation d'une valeur de puissance demandée $(P_t^{ref})$ au point de raccordement commun, chaque dispositif de stockage d'énergie électrique (i) présentant un état de charge instantané $(SOC_i)$ respectif, comprenant des étapes de :

a - déterminer un nombre de dispositifs de stockage d'énergie électrique nécessaire $(N_{needed})$ pour fournir la valeur de puissance demandée à un instant t,

b - activer et/ou désactiver un ou plusieurs des dispositifs de stockage d'énergie électrique, en fonction du nombre de dispositifs de stockage d'énergie électrique nécessaire $(N_{needed})$ déterminé, et des valeurs des états de charge instantanés $(SOC_i)$ de chacun des dispositifs de stockage d'énergie électrique (i), et

c - répartir la puissance demandée $(P_t^{ref})$ entre les dispositifs de stockage d'énergie électrique activés.

FIG. 3A

**Description**

**DOMAINE DE L'INVENTION**

L'invention concerne un procédé de pilotage de charge et de décharge d'une pluralité de dispositifs de stockage d'énergie électrique.

**ETAT DE LA TECHNIQUE**

Les réseaux de distribution d'énergie électrique incluent généralement des dispositifs de stockage d'énergie électrique. Ces dispositifs de stockage d'énergie électriques ont pour fonction de stocker et de restituer de l'énergie électrique, par exemple pour compenser des variations de production d'énergie électrique par certains équipements de production électrique fonctionnant par intermittence (par exemple des panneaux photovoltaïques et des éoliennes) ou encore pour être en mesure de faire face à des pics de demande de puissance en évitant de devoir surdimensionner les équipements de production électrique raccordés au réseau.

Ces dispositifs de stockage d'énergie électrique comprennent généralement des ensembles de batteries et des onduleurs, chaque onduleur permettant de convertir le courant continu fourni par les ensembles de batteries en courant alternatif destiné à alimenter le réseau de distribution d'énergie électrique.

Plusieurs dispositifs de stockage d'énergie électrique peuvent être raccordés à un même point de raccordement, appelé « point de raccordement commun » (PCC), du réseau de distribution d'énergie électrique. Dans ce cas, un système de pilotage permet de distribuer en temps réel la puissance électrique soutirée à chaque dispositif de stockage d'énergie électrique en fonction de la puissance totale demandée au point de raccordement commun.

Plusieurs stratégies de pilotage peuvent être mises en œuvre par le système de pilotage.

Une première stratégie consiste à diviser la puissance totale demandée au point de raccordement commun, à parts égales entre les dispositifs de stockage d'énergie électrique raccordés au point de raccordement commun. De cette manière, tous les dispositifs de stockage d'énergie électrique sont activés en même temps et fournissent des fractions égales de la puissance totale demandée.

Toutefois, cette première stratégie n'est pas optimale, car dans le cas où la puissance totale demandée au point de raccordement commun est faible, chaque dispositif de stockage d'énergie électrique est activé pour fournir une très faible puissance. Or, le fonctionnement des onduleurs génère des pertes électriques incompressibles (pertes de conduction et pertes de commutation), alors que la puissance fournie est très faible.

De plus, l'activation simultanée de tous les dispositifs de stockage d'énergie électrique accélère le vieillissement des batteries.

Une deuxième stratégie consiste à déterminer une part de la puissance à demander à chaque dispositif de stockage d'énergie électrique, en fonction d'un écart entre l'état de charge du dispositif de stockage d'énergie électrique et un état de charge moyen déterminé sur l'ensemble des dispositifs de stockage d'énergie électrique. Avec cette deuxième stratégie, un dispositif de stockage d'énergie électrique qui présente un état de charge éloigné de l'état de charge moyen, est plus sollicité qu'un dispositif qui présente un état de charge proche de l'état de charge moyen.

Cette deuxième stratégie tend à équilibrer les états de charge des dispositifs de stockage d'énergie électrique, en faisant converger les différents états de charges vers un même état de charge moyen.

Toutefois, cette deuxième stratégie a également pour inconvénient de solliciter simultanément tous les dispositifs de stockage d'énergie électrique, ce qui n'est pas efficace lorsque la puissance totale demandée est faible. De plus, cette deuxième stratégie génère également un vieillissement accéléré des batteries.

**RESUME DE L'INVENTION**

Un but de l'invention est de proposer un procédé de pilotage de charge et de décharge d'une pluralité de dispositifs de stockage d'énergie électrique, qui soit plus efficace, c'est-à-dire qui génère moins de pertes électriques pour une puissance totale demandée identique.

Ce but est atteint dans le cadre de la présente invention, grâce à un procédé de pilotage de charge et de décharge d'une pluralité de dispositifs de stockage d'énergie électrique raccordés à un point de raccordement commun (PCC) d'un réseau de distribution électrique, en fonction d'une variation d'une valeur de puissance totale demandée ( $P_t^{ref}$ ) au point de raccordement commun, chaque dispositif de stockage d'énergie électrique ($i$) présentant un état de charge instantané ($SOC_i$) respectif, comprenant des étapes de :

- a - déterminer un nombre de dispositifs de stockage d'énergie électrique nécessaire ($N_{needed}$) pour fournir la valeur de puissance totale demandée à un instant t, le nombre de dispositifs de stockage d'énergie électrique nécessaire ($N_{needed}$) étant déterminé de telle sorte que :

  • si la valeur de puissance totale demandée diminue, le nombre de dispositifs de stockage d'énergie électrique nécessaire ($N_{needed}$) est le nombre N maximal de dispositifs de stockage d'énergie électrique, tel que la valeur de puissance totale demandée divisée par le nombre N est supérieure à un premier seuil de puissance prédéfini (*threshold OFF*), et

- si la valeur de puissance totale demandée augmente, le nombre de dispositifs de stockage d'énergie électrique nécessaire ($N_{needed}$) est le nombre N minimal de dispositifs de stockage d'énergie électrique, tel que la valeur de puissance demandée divisée par le nombre N est inférieure à un deuxième seuil de puissance prédéfini (*threshold ON*),

- b - activer et/ou désactiver un ou plusieurs des dispositifs de stockage d'énergie électrique, en fonction du nombre de dispositifs de stockage d'énergie électrique nécessaire ($N_{needed}$) déterminé, et des valeurs des états de charge instantanés ($SOC_i$) de chacun des dispositifs de stockage d'énergie électrique (*i*), et

- c - répartir la puissance totale demandée ($P_t^{ref}$) entre les dispositifs de stockage d'énergie électrique activés.

Dans un tel procédé, la fraction de la puissance demandée à chaque dispositif de stockage électrique, est toujours supérieure au premier seuil de puissance prédéfini ou au deuxième seuil de puissance prédéfini.

En effet, ce procédé de pilotage peut être mis en œuvre de manière à :

- désactiver un dispositif de stockage d'énergie électrique, uniquement si la puissance demandée à chaque dispositif de stockage d'énergie électrique actif devient inférieure au premier seuil de puissance prédéfini, et

- activer un dispositif de stockage d'énergie électrique, uniquement si la puissance demandée à chaque dispositif de stockage d'énergie électrique actif devient inférieure au deuxième seuil de puissance prédéfini.

Cela évite de solliciter simultanément tous les dispositifs de stockage d'énergie électrique et par conséquent limite les pertes électriques et le vieillissement accéléré des dispositifs de stockage d'énergie électrique.

Le premier seuil de puissance prédéfini et le deuxième seuil de puissance prédéfini peuvent être identiques.

Toutefois, dans un mode de réalisation préférentiel du procédé, le deuxième seuil de puissance prédéfini (*threshold ON*) est supérieur au premier seuil de puissance (*threshold OFF*), ce qui permet de minimiser le nombre d'activations et de désactivations des dispositifs de stockage d'énergie électrique, lorsque la puissance demandée à chaque dispositif est proche du seuil de puissance prédéfini.

Selon un mode de réalisation possible du procédé, l'étape b comprend des sous-étapes de :

- d - si la valeur de puissance demandée est positive, déterminer une valeur d'état de charge instantanée maximale parmi les valeurs d'état de charge ($SOC_i$) des dispositifs de stockage d'énergie électrique,

- e - comparer la valeur d'état de charge instantané ($SOC_i$) de chaque dispositif de stockage d'énergie électrique avec la valeur d'état de charge instantanée maximale,

- f - sélectionner les dispositifs de stockage d'énergie électrique susceptibles d'être activés, comme étant les dispositifs de stockage d'énergie électrique qui présentent un état de charge instantané supérieur à la valeur d'état de charge instantanée maximale moins une première valeur de tolérance prédéfinie ($SOC_{tol}$).

Selon un mode de réalisation possible du procédé, l'étape b comprend des sous-étapes de :

- g - si la valeur de puissance demandée est négative, déterminer une valeur d'état de charge instantanée minimale parmi les valeurs d'état de charge ($SOC_i$) des dispositifs de stockage d'énergie électrique,

- h - comparer la valeur d'état de charge instantané ($SOC_i$) de chaque dispositif de stockage d'énergie électrique avec la valeur d'état de charge instantanée minimale,

- i - sélectionner les dispositifs de stockage d'énergie électrique susceptibles d'être activés, comme étant les dispositifs de stockage d'énergie électrique qui présentent un état de charge instantané inférieur à la valeur d'état de charge instantanée minimale plus une deuxième valeur de tolérance prédéfinie ($SOC_{tol}$).

Selon un mode de réalisation possible du procédé, l'étape b comprend en outre des sous-étapes de :

- j - déterminer un nombre de dispositifs de stockage d'énergie électrique susceptibles d'être activés ($N_{active}$),

- k - comparer le nombre de dispositifs de stockage d'énergie électrique susceptibles d'être activés ($N_{active}$) avec le nombre de dispositifs de stockage d'énergie électrique nécessaire ($N_{needed}$), et

- l - si le nombre de dispositifs de stockage d'énergie électrique susceptibles d'être activés ($N_{active}$) est égal au nombre de dispositifs de stockage d'énergie électrique nécessaire ($N_{needed}$), activer les dispositifs de stockage d'énergie électrique susceptibles d'être activés,

- m - si le nombre de dispositifs de stockage d'énergie électrique susceptibles d'être activés ($N_{active}$) est supérieur au nombre de dispositifs de stockage d'énergie électrique nécessaire ($N_{needed}$), activer une partie seulement des dispositifs de stockage d'énergie électrique susceptibles d'être activés,

- o - si le nombre de dispositifs de stockage d'énergie électrique susceptibles d'être activés ($N_{active}$) est inférieur au nombre de dispositifs de stockage d'énergie électrique nécessaire ($N_{needed}$), activer les dispositifs de stockage d'énergie électrique susceptibles d'être activés et un ou plusieurs dispositifs de stockage d'énergie électrique additionnels.

Selon un mode de réalisation possible du procédé, dans le cas où le nombre de dispositifs de stockage d'énergie électrique susceptibles d'être activés ($N_{active}$) est supérieur au nombre de dispositifs de stockage d'énergie électrique nécessaire ($N_{needed}$), l'étape m comprend :

- si la valeur de puissance demandée est négative, activer les dispositifs de stockage d'énergie électrique présentant les valeurs d'état de charge les moins élevées, parmi les dispositifs de stockage d'énergie électrique susceptibles d'être activés,
- si la valeur de puissance demandée est positive, activer les dispositifs de stockage d'énergie électrique présentant les valeurs d'état de charge les plus élevées, parmi les dispositifs de stockage d'énergie électrique susceptibles d'être activés.

Selon un mode de réalisation possible du procédé, dans le cas où le nombre de dispositifs de stockage d'énergie électrique susceptibles d'être activés ($N_{active}$) est inférieur au nombre de dispositifs de stockage d'énergie électrique nécessaire ($N_{needed}$), l'étape o comprend :

- si la valeur de puissance demandée est négative, activer les dispositifs de stockage d'énergie électrique susceptibles d'être activés, ainsi qu'un ou plusieurs dispositifs de stockage d'énergie électrique additionnels présentant les valeurs d'état de charge les moins élevées parmi les dispositifs de stockage d'énergie électrique qui n'a (ont) pas été sélectionné(s) en tant que dispositif(s) de stockage d'énergie électrique susceptible(s) d'être activé(s),
- si la valeur de puissance demandée est positive, activer les dispositifs de stockage d'énergie électrique susceptibles d'être activés, ainsi qu'un ou plusieurs dispositifs de stockage d'énergie électrique additionnels présentant les valeurs d'état de charge les plus élevées parmi les dispositifs de stockage d'énergie électrique qui n'a (ont) pas été sélectionné(s) en tant que dispositif(s) de stockage d'énergie électrique susceptible(s) d'être activé(s).

Selon un mode de réalisation possible du procédé, les étapes j à o sont répétées au cours du temps, de manière à activer et/ou désactiver au fur et à mesure des variations des valeurs des états de charge des dispositifs de stockage d'énergie électrique.

Selon un mode de réalisation possible du procédé, le procédé comprend une étape de :

- p - appliquer un cycle de charge et de décharge à un dispositif de stockage d'énergie électrique choisi parmi la pluralité de dispositifs de stockage d'énergie électrique, de sorte qu'au cours du cycle de charge et de décharge, de l'énergie électrique est transférée entre le dispositif de stockage d'énergie électrique choisi et les autres dispositifs de stockage d'énergie électrique,

- q - mesurer une capacité du dispositif de stockage d'énergie électrique choisi, en fonction de variations de paramètres électriques du dispositif de stockage d'énergie électrique mesurés au cours du temps pendant le cycle de charge et de décharge, et dans lequel les étapes a à c sont appliquées à la pluralité de dispositifs de stockage d'énergie électrique, à l'exception du dispositif de stockage d'énergie électrique choisi.

L'invention concerne en outre un produit programme d'ordinateur comprenant des instructions de code de programme pour l'exécution des étapes d'un procédé de pilotage tel que défini précédemment, lorsque ce programme est exécuté par un ordinateur.

L'invention concerne également un dispositif de pilotage de charge et de décharge d'une pluralité de dispositifs de stockage d'énergie électrique raccordés à un point de raccordement commun (PCC) d'un réseau de distribution électrique, comprenant un processeur et une mémoire dans laquelle est enregistré un programme comprenant des instructions pour la mise en œuvre par le processeur d'un procédé de pilotage tel que défini précédemment.

## PRESENTATION DES DESSINS

D'autres caractéristiques et avantages ressortiront encore de la description qui suit, laquelle est purement illustrative, et doit être lue en regard des figures annexées, parmi lesquelles :

- la figure 1 représente de manière schématique une partie d'un réseau de distribution d'énergie électrique comprenant une pluralité de dispositifs de stockage d'énergie électrique et un dispositif de pilotage de charge et de décharge des dispositifs de stockage d'énergie électrique,
- la figure 2 représente de manière schématique le dispositif de pilotage de charge et de décharge des dispositifs de stockage d'énergie électrique,
- la figure 3A et la figure 3B représentent de manière schématique des étapes d'un procédé de pilotage de charge et de décharge des dispositifs de stockage d'énergie électrique,
- la figure 4 est un diagramme représentant de manière schématique une variation du nombre de dispositifs de stockage d'énergie électrique nécessaire au cours du temps, en fonction de la puissance demandée, pour un exemple de variation de puissance totale demandée au cours du temps,

- la figure 5 est un diagramme représentant de manière schématique un exemple de variation de la fraction de la puissance demandée au cours du temps à un dispositif de stockage d'énergie électrique,
- la figure 6 est un diagramme représentant de manière schématique une variation de la puissance totale demandée à l'ensemble des dispositifs de stockage d'énergie électrique au cours du temps, une variation de la fraction de la puissance demandée à chaque dispositif de stockage d'énergie électrique au cours du temps, une variation des états de charge des dispositifs de stockage d'énergie électrique au cours du temps, et l'état des dispositifs de stockage d'énergie électrique (activé ou désactivé) au cours du temps, pour un procédé de pilotage classique, ne mettant pas en œuvre l'invention,
- la figure 7 est un diagramme représentant de manière schématique une variation de la puissance totale demandée à l'ensemble des dispositifs de stockage d'énergie électrique au cours du temps, une variation de la fraction de la puissance demandée à chaque dispositif de stockage d'énergie électrique au cours du temps, une variation des états de charge des dispositifs de stockage d'énergie électrique au cours du temps, et l'état des dispositifs de stockage d'énergie électrique (activé ou désactivé) au cours du temps, pour un procédé de pilotage conforme à un mode de réalisation de l'invention,
- la figure 8 est un diagramme représentant de manière schématique le niveau des pertes électriques pour un procédé de pilotage classique, ne mettant pas en œuvre l'invention, et pour un procédé de pilotage conforme à un mode de réalisation de l'invention,

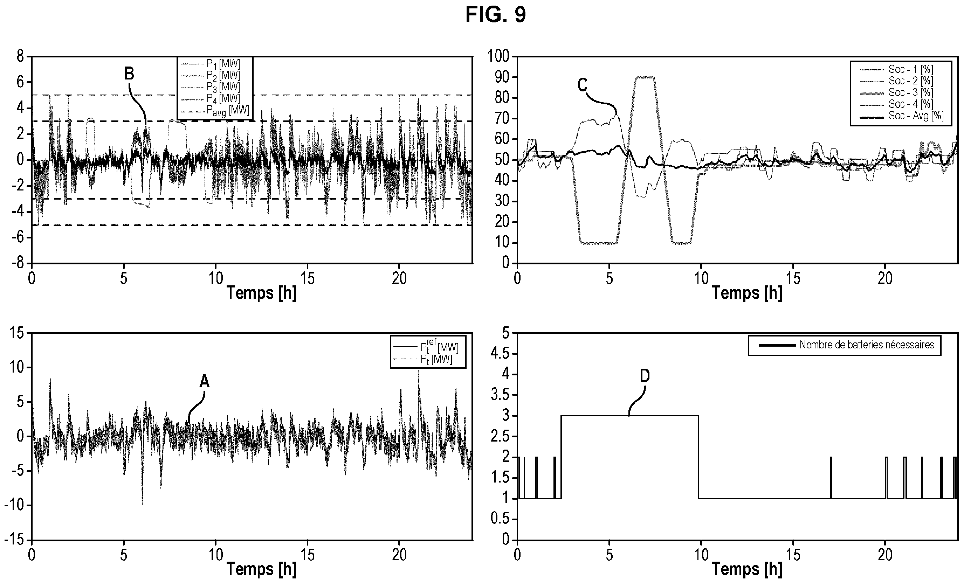

- la figure 9 est un diagramme représentant de manière schématique une variation de la puissance totale demandée à l'ensemble des dispositifs de stockage d'énergie électrique au cours du temps, une variation de la fraction de la puissance demandée à chaque dispositif de stockage d'énergie électrique au cours du temps, une variation des états de charge des dispositifs de stockage d'énergie électrique au cours du temps, et l'état des dispositifs de stockage d'énergie électrique (activé ou désactivé) au cours du temps, pour un procédé de pilotage conforme à un mode de réalisation de l'invention, dans lequel un cycle de charge et de décharge est appliqué à l'un des dispositifs de stockage d'énergie électrique.

## DESCRIPTION DETAILLEE D'UN MODE DE REALISATION DE L'INVENTION

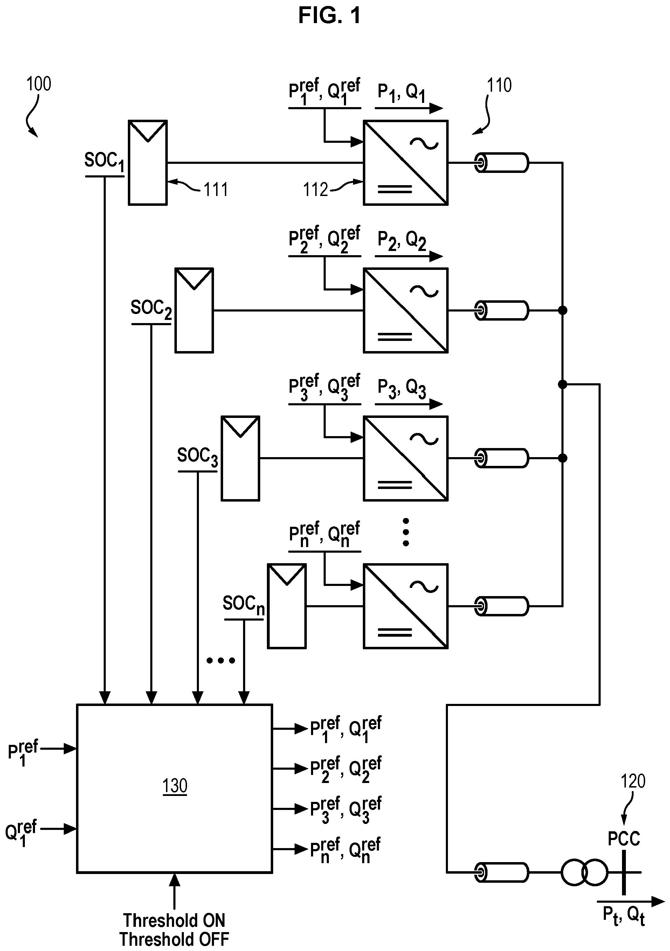

Sur la figure 1, la partie du réseau de distribution d'énergie électrique représentée 100 comprend une pluralité de dispositifs de stockage d'énergie électrique 110, raccordés à un point de raccordement commun (PCC) 120 du réseau de distribution électrique.

Plus précisément, la partie du réseau de distribution d'énergie électrique 100 représentée comprend un nombre n de dispositifs de stockage d'énergie électrique 110.

Chaque dispositif de stockage d'énergie électrique 110 comprend un ensemble de batterie 111 et un onduleur 112 propre à convertir un courant continu fourni par l'ensemble de batterie 111 en un courant alternatif destiné à alimenter le point de raccordement commun 120 du réseau de distribution d'énergie électrique 100. Un ensemble de batterie 111 peut par exemple comprendre de 1 à 40 batterie(s).

Ainsi, chaque ensemble de batterie 111 est raccordé au point de raccordement commun 120 à travers un onduleur respectif 112.

Chaque ensemble de batterie i présente un état de charge, dont la valeur instantanée est $SOC_i$.

La partie du réseau de distribution d'énergie électrique 100 comprend en outre un dispositif de pilotage de charge et de décharge 130 des dispositifs de stockage d'énergie électrique 110.

Le dispositif de pilotage 130 est propre à recevoir en entrée un signal représentatif d'une valeur de puissance totale demandée $P_t^{ref}$ au point de raccordement commun 120, et à générer en sortie des signaux de commande des dispositifs de stockage d'énergie électrique. Plus précisément, chaque signal de commande généré en sortie par le dispositif de pilotage est un signal représentatif d'une valeur de puissance $P_i^{ref}$ devant être fournie par le dispositif de stockage d'énergie électrique i.

Les valeurs de puissance $P_i^{ref}$ devant être fournies par les dispositifs de stockage d'énergie électrique 1 à n sont telles que :

$$\sum_{i=1}^{n} P_i^{ref} = P_t^{ref}$$

Il convient de noter que la valeur de puissance totale demandée $P_t^{ref}$ au point de raccordement commun 120 peut être positive ou négative. Par convention, dans le cas où la valeur de $P_t^{ref}$ est positive, cela signifie que les dispositifs de stockage d'énergie électrique 110 fournissent de la puissance électrique au reste du réseau de distribution électrique via le point de raccordement électrique commun 120, c'est-à-dire que les dispositifs de stockage d'énergie électrique se déchargent.

A l'inverse, dans le cas où la valeur de $P_t^{ref}$ est négative, cela signifie que les dispositifs de stockage d'énergie électrique 110 reçoivent de la puissance électrique de la part du reste du réseau de distribution électrique via le point de raccordement commun 120, c'est-à-dire que les dispositifs de stockage d'énergie électrique 110 se chargent.

Le dispositif de pilotage 130 peut comprendre un microprocesseur et une mémoire dans laquelle est enregistré un programme comprenant des instructions pour la mise en œuvre d'un procédé de pilotage de charge et de décharge des dispositifs de stockage d'énergie électrique. Lorsqu'il exécute le programme, le processeur est propre à déterminer en temps réel les valeurs de puissance $P_i^{ref}$ devant être fournies par les dispositifs de stockage d'énergie électrique i, en fonction de la valeur de puissance totale demandée $P_t^{ref}$ au point de raccordement commun 120 et des valeurs des états de charge $SOC_i$ des dispositifs de stockage d'énergie électrique i.

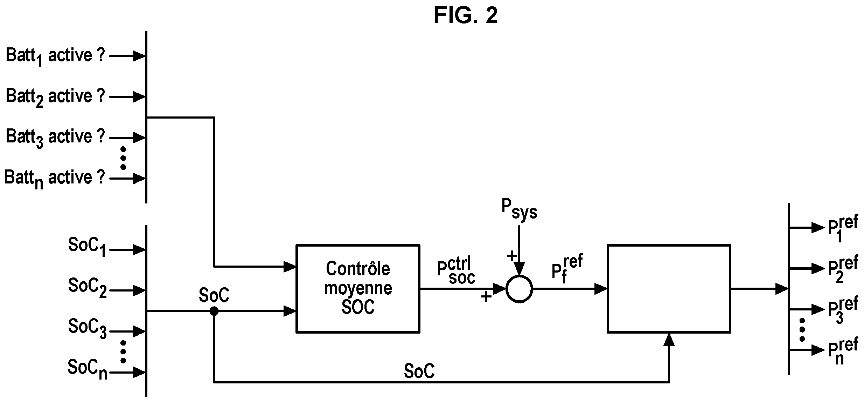

La figure 2 représente de manière schématique la manière dont est déterminée la valeur de puissance totale demandée $P_t^{ref}$. Un contrôle en cascade reçoit une puissance $P_{sys}$ à fournir par les dispositifs de stockage d'énergie électrique 110 pour procurer des services auxiliaires (en anglais « service system »), nécessaires au fonctionnement du réseau de distribution électrique, en plus que la transmission et la distribution d'énergie électrique (ces services auxiliaires peuvent par exemple inclure un contrôle de la fréquence du réseau de distribution électrique, un contrôle de la tension fournie par le réseau de distribution électrique, une restauration d'alimentation, une gestion opérationnelle du réseau de distribution électrique) et calcule la puissance $P_t^{ref} = P_{sys} + P_{soc}^{ctrl}$, dont $P_{soc}^{ctrl}$ contrôle l'état de charge moyen de l'ensemble des dispositifs de stockage d'énergie électrique.

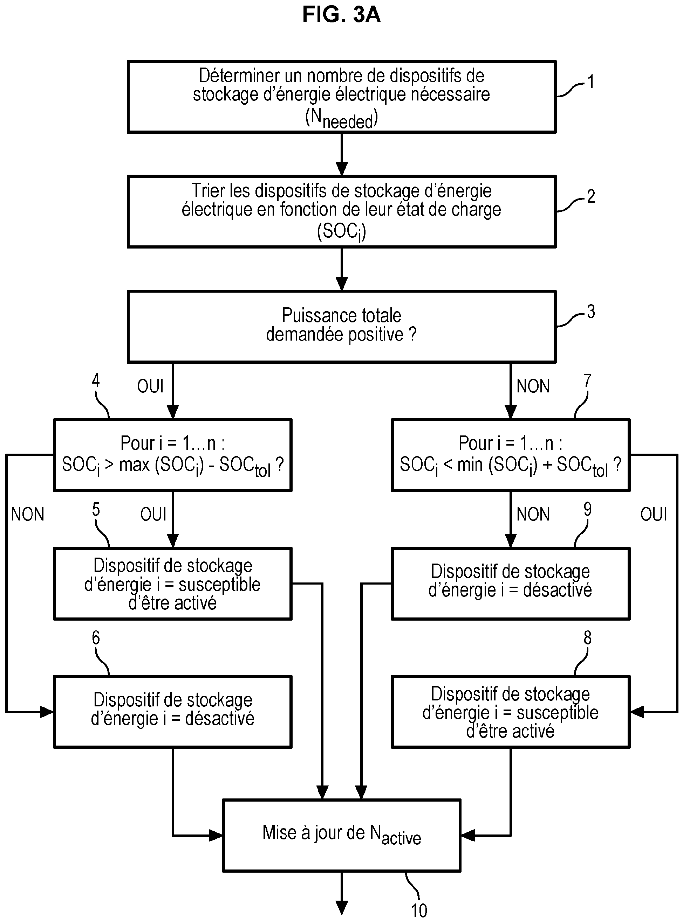

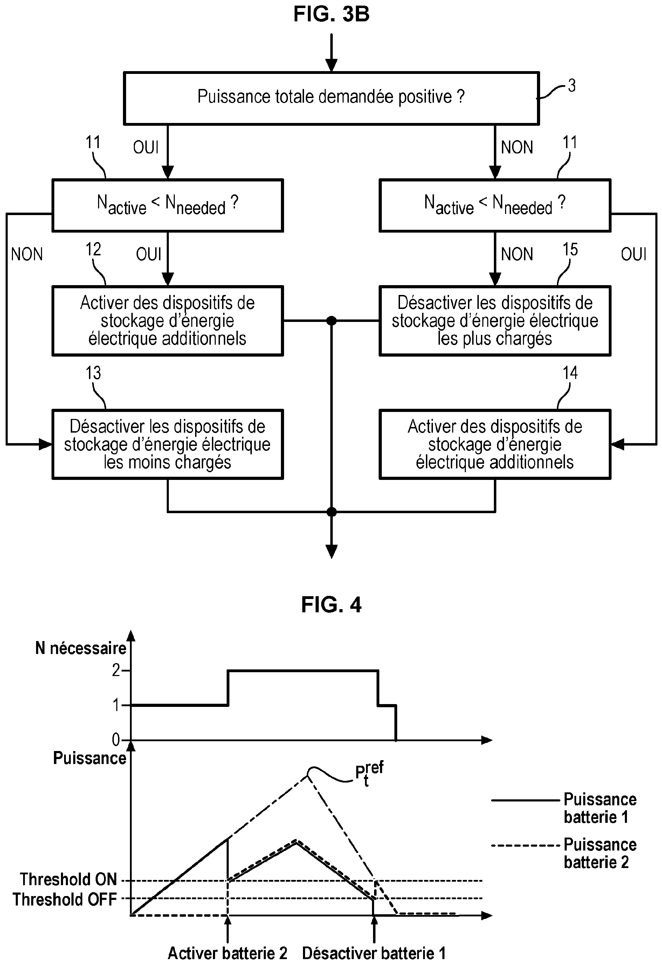

Sur les figures 3A et 3B, le procédé de pilotage de charge et de décharge des dispositifs de stockage d'énergie électrique comprend les étapes suivantes.

Selon une première étape 1, le dispositif de pilotage 130 détermine un nombre de dispositifs de stockage d'énergie électrique nécessaire $N_{needed}$ pour fournir la valeur de puissance totale demandée à un instant t.

Le nombre de dispositifs de stockage d'énergie électrique nécessaire $N_{needed}$ est déterminé de telle sorte que :

si la valeur de puissance totale demandée $P_t^{ref}$ diminue, le nombre de dispositifs de stockage d'énergie électrique nécessaire $N_{needed}$ est le nombre N maximal de dispositifs de stockage d'énergie électrique, tel que la valeur de puissance totale demandée divisée par le nombre N est supérieur à un premier seuil de puissance prédéfini *threshold OFF,* et

si la valeur de puissance totale demandée $P_t^{ref}$ augmente, le nombre de dispositifs de stockage d'énergie électrique nécessaire $N_{needed}$ est le nombre N minimal de dispositifs de stockage d'énergie électrique, tel que la valeur de puissance demandée divisée par le nombre N est inférieur à un deuxième seuil de puissance prédéfini *(threshold ON).*

La figure 4 montre un exemple de variation du nombre de dispositifs de stockage d'énergie électrique nécessaire $N_{needed}$ au cours du temps en fonction de la variation de la puissance totale demandée $P_t^{ref}$ au cours du temps.

Dans cet exemple, la valeur de la puissance totale demandée $P_t^{ref}$ augmente de manière linéaire au cours d'une première période de temps depuis une valeur nulle jusqu'à une valeur maximale, puis diminue de manière linéaire au cours d'une deuxième période de temps, qui suit la première période de temps, depuis la valeur maximale jusqu'à une valeur nulle.

Au début de la première période de temps, un seul dispositif de stockage d'énergie électrique est nécessaire ($N_{needed}$ = 1) pour fournir la puissance totale demandée $P_t^{ref}$. Ainsi, un seul dispositif de stockage d'énergie électrique est activé. Puis, lorsque la puissance totale demandée atteint une valeur égale à 2 fois le deuxième seuil de puissance prédéfini *threshold ON,* deux dispositifs de stockage d'énergie électrique sont nécessaires ($N_{needed}$ = 2). Ainsi, un deuxième dispositif de stockage d'énergie électrique est activé.

Les deux dispositifs de stockage d'énergie électrique restent activés tant que la puissance demandée à chaque dispositif de stockage d'énergie est supérieure au premier seuil de puissance prédéfini *threshold OFF.* Autrement dit, les deux dispositifs de stockage d'énergie électrique restent activés tant que la puissance totale demandée est supérieure à 2 fois le premier seuil de puissance prédéfini *threshold OFF.*

Au cours de la deuxième période de temps, la puissance totale demandée $P_t^{ref}$ diminue. Lorsque la puissance totale demandée devient inférieure à 2 fois le premier seuil de puissance prédéfini *threshold OFF,* un seul dispositif de stockage d'énergie électrique est nécessaire ($N_{needed}$ = 1). Ainsi, l'un des dispositifs de stockage d'énergie électrique est désactivé.

De cette manière, lorsque plus d'un dispositif de stockage d'énergie électrique est activé, chaque dispositif de stockage d'énergie électrique activé fournit toujours une puissance qui ne peut être inférieure à une puissance minimale.

Comme illustré sur la figure 4, le premier seuil de puissance *threshold OFF* et le deuxième seuil de puissance prédéfini *threshold ON* sont choisis de sorte que le deuxième seuil de puissance prédéfini *threshold ON* est supérieur au premier seuil de puissance *threshold OFF*. Cela permet de créer une hystérésis dans le cycle d'activation et de désactivation des dispositifs de stockage d'énergie électrique, et ainsi de minimiser l'activation et la désactivation des dispositifs de stockage d'énergie électrique.

Selon une deuxième étape 2, le dispositif de pilotage 130 trie les dispositifs de stockage d'énergie électrique i en fonction de leur état de charge $SOC_i$.

Par exemple, les dispositifs de stockage d'énergie électrique sont triés selon un ordre croissant d'état de charge, c'est à dire en allant du dispositif de stockage d'énergie électrique ayant l'état de charge le plus faible jusqu'au dispositif de stockage d'énergie électrique ayant l'état de charge le plus élevé.

Selon une troisième étape 3, le dispositif de pilotage 130 détermine si la puissance totale demandée est positive.

Si la puissance totale demandée $P_t^{ref}$ est positive, cela signifie que les dispositifs de stockage d'énergie électrique fournissent de la puissance électrique au reste du réseau de distribution électrique, c'est-à-dire que les dispositifs de stockage d'énergie électrique se déchargent.

Si la puissance totale demandée $P_t^{ref}$ est négative, cela signifie que les dispositifs de stockage d'énergie électrique reçoivent de la puissance électrique de la part du reste du réseau de distribution électrique, c'est-à-dire que les dispositifs de stockage d'énergie électrique se chargent.

Selon une quatrième étape 4, si la puissance totale demandée est positive, alors le dispositif de pilotage 130 compare la valeur d'état de charge instantané $SOC_i$ de chaque dispositif de stockage d'énergie électrique i avec la valeur d'état de charge instantanée maximale max ($SOC_i$).

Selon une cinquième étape 5, pour chaque dispositif i, si la valeur d'état de charge instantané $SOC_i$ est supérieure à la valeur d'état de charge instantanée maximale moins une première valeur de tolérance prédéfinie :

$$SOC_i > \max(SOC_i) - SOC_{tol}$$

alors le dispositif de pilotage 130 sélectionne le dispositif de stockage d'énergie électrique i comme étant susceptible d'être activé.

Selon une sixième étape 6, pour chaque dispositif i, si la valeur d'état de charge instantané $SOC_i$ est inférieure à la valeur d'état de charge instantanée maximale moins la première valeur de tolérance prédéfinie :

$$SOC_i < \max(SOC_i) - SOC_{tol}$$

alors le dispositif de pilotage 130 sélectionne le dispositif de stockage d'énergie électrique i comme étant désactivé.

Selon une septième étape 7, si puissance totale demandée $P_t^{ref}$ est négative, alors le dispositif de pilotage 130 compare la valeur d'état de charge instantané $SOC_i$ de chaque dispositif de stockage d'énergie électrique i avec la valeur d'état de charge instantanée minimale min($SOC_i$).

Selon une huitième étape 8, pour chaque dispositif i, si la valeur d'état de charge instantané $SOC_i$ est inférieure à la valeur d'état de charge instantanée minimale plus une deuxième valeur de tolérance prédéfinie :

$$(SOC_i) < \min(SOC_i) + SOC_{tol}$$

alors le dispositif de pilotage 130 sélectionne le dispositif de stockage d'énergie électrique i comme étant susceptible d'être activé.

Selon une neuvième étape 9, pour chaque dispositif i, si la valeur d'état de charge instantané $SOC_i$ est inférieure à la valeur d'état de charge instantanée minimale plus la deuxième valeur de tolérance prédéfinie :

$$SOC_i > \min(SOC_i) + SOC_{tol}$$

alors le dispositif de pilotage 130 sélectionne le dispositif de stockage d'énergie électrique i comme étant désactivé.

Selon une dixième étape 10, le dispositif de pilotage détermine un nombre $N_{active}$ de dispositifs de stockage d'énergie électrique susceptibles d'être activés.

En parallèle, selon une onzième étape 11, le dispositif de pilotage compare le nombre de dispositifs de stockage d'énergie électrique susceptibles d'être activés $N_{active}$ avec le nombre de dispositifs de stockage d'énergie électrique nécessaire $N_{needed}$.

Selon une douzième étape 12, si la puissance totale demandée $P_t^{ref}$ est positive et si le nombre de dispositifs de stockage d'énergie électrique susceptibles d'être activés $N_{active}$ est inférieur au nombre de dispositifs de stockage d'énergie électrique nécessaire $N_{needed}$, le dispositif de pilotage 130 active les dispositifs de stockage d'énergie électrique susceptibles d'être activés et un ou plusieurs dispositifs de stockage d'énergie électrique additionnels.

Plus précisément, le ou les dispositifs de stockage d'énergie électrique additionnels est(sont) le ou les dispositif(s) de stockage d'énergie électrique présentant les valeurs d'état de charge les plus élevées parmi les dispositifs de stockage d'énergie électrique qui n'a (ont) pas été sélectionné(s) en tant que dispositif(s) de stockage d'énergie électrique susceptible(s) d'être activé(s).

Selon une treizième étape 13, si la puissance totale demandée $P_t^{ref}$ est positive et si le nombre de dispositifs de stockage d'énergie électrique susceptibles d'être activés $N_{active}$ est supérieur au nombre de dispositifs de stockage d'énergie électrique nécessaire $N_{needed}$, le dispositif de pilotage 130 active une partie seulement des dispositifs de stockage d'énergie électrique susceptibles d'être activés.

Plus précisément, le dispositif de pilotage 130 active les dispositifs de stockage d'énergie électrique susceptibles d'être activés présentant les valeurs d'état de charge les plus élevées parmi les dispositifs de stockage d'énergie électrique qui ont été sélectionnés en tant que dispositifs de stockage d'énergie électrique susceptibles d'être activés.

Autrement dit, le dispositif de pilotage 130 désactive les dispositifs de stockage d'énergie électrique les moins chargés, parmi les dispositifs de stockage d'énergie électrique susceptibles d'être activés.

Selon une quatorzième étape 14, si la puissance totale demandée est négative et si le nombre de dispositifs de stockage d'énergie électrique susceptibles d'être activés $N_{active}$ est inférieur au nombre de dispositifs de stockage d'énergie électrique nécessaire $N_{needed}$, le dispositif de pilotage 130 active les dispositifs de stockage d'énergie électrique susceptibles d'être activés et un ou plusieurs dispositifs de stockage d'énergie électrique additionnels.

Plus précisément, le ou les dispositifs de stockage d'énergie électrique additionnels est(sont) le ou les dispositif(s) de stockage d'énergie électrique présentant les valeurs d'état de charge les moins élevées parmi les dispositifs de stockage d'énergie électrique qui n'a (ont) pas été sélectionné(s) en tant que dispositif(s) de stockage d'énergie électrique susceptible(s) d'être activé(s).

Selon une quinzième étape 15, si la puissance totale demandée $P_t^{ref}$ est négative et si le nombre de dispositifs de stockage d'énergie électrique susceptibles d'être activés $N_{active}$ est supérieur au nombre de dispositifs de stockage d'énergie électrique nécessaire $N_{needed}$, le dispositif de pilotage 130 active une partie seulement des dispositifs de stockage d'énergie électrique susceptibles d'être activés.

Plus précisément, le dispositif de pilotage 130 active les dispositifs de stockage d'énergie électrique susceptibles d'être activés présentant les valeurs d'état de charge les moins élevées parmi les dispositifs de stockage d'énergie électrique qui ont été sélectionnés en tant que dispositifs de stockage d'énergie électrique susceptibles d'être activés.

Autrement dit, le dispositif de pilotage 130 désactive les dispositifs de stockage d'énergie électrique les plus chargés, parmi les dispositifs de stockage d'énergie électrique susceptibles d'être activés.

De cette manière, les nombre de dispositifs de stockage d'énergie électrique est toujours égal au nombre de dispositifs de stockage d'énergie électrique nécessaire $N_{needed}$.

Le dispositif de pilotage 130 répète les étapes 4 à 15, de sorte que pour un nombre de dispositifs de stockage d'énergie électrique nécessaire $N_{needed}$ donné, le dispositif de pilotage active et/ou désactive des dispositifs de stockage d'énergie électrique pour tenir compte des variations des états de charge des différents dispositifs de stockage d'énergie électrique au cours du temps.

De plus, le dispositif de pilotage 130 renouvelle les étapes 1 à 3 de manière à mettre à jour le nombre de dispositifs de stockage d'énergie électrique nécessaire $N_{needed}$ en fonction des variations de la puissance totale demandée $P_t^{ref}$ au point de raccordement commun 120.

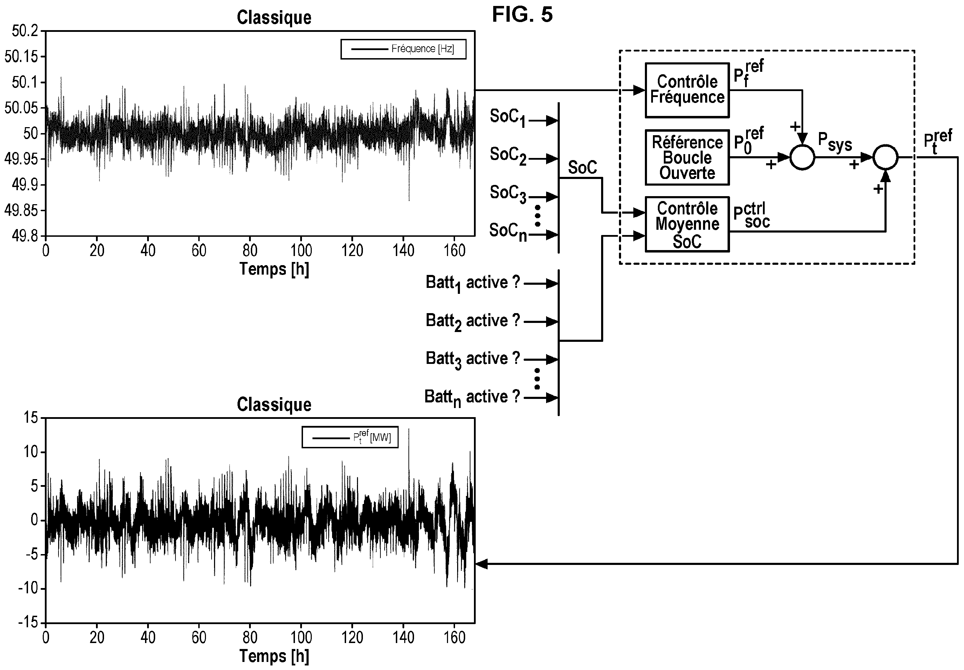

La figure 5 est un diagramme représentant de manière schématique un exemple de variation de la fraction de la puissance demandée au cours du temps à un dispositif de stockage d'énergie électrique.

Dans cet exemple, quatre dispositifs de stockage d'énergie électrique sont raccordés au point de raccordement commun. La puissance totale demandée $P_t^{ref}$ au point de raccordement commun est déterminée en fonction d'une fréquence du réseau de distribution électrique. Plus précisément, dans l'exemple illustré sur la figure 5, la puissance totale demandée $P_t^{ref}$ au point de raccordement commun est déterminée comme une somme de trois composantes de puissance $P_f^{ref}$, $P_0^{ref}$ et $P_{SOC}^{ref}$.

La première composante de puissance $P_f^{ref}$ dépend de la fréquence du réseau de distribution électrique.

En effet, la fréquence d'un réseau de distribution électrique doit être maintenue à une valeur de fréquence nominale prédéfinie tout au long du fonctionnement du réseau de distribution électrique. Par exemple, en France, la valeur de la fréquence nominale d'un réseau de distribution électrique est de 50 Hertz.

Si la fréquence du réseau de distribution électrique chute, cela veut dire que la consommation augmente et que les équipements de production électrique doivent fournir plus d'énergie électrique au réseau. Dans cette situation, les dispositifs de stockage d'énergie électrique peuvent contribuer à fournir de l'énergie électrique au réseau de distribution électrique.

Si la fréquence du réseau de distribution électrique augmente, cela veut dire que la consommation diminue et que les équipements de production électrique doivent fournir moins d'énergie. Dans cette situation, les dispositifs de stockage d'énergie électrique peuvent absorber le surplus d'énergie électrique produite par ces équipements de production électrique (par exemple par des panneaux photovoltaïques ou des éoliennes).

La fréquence du réseau de distribution électrique est donc un des paramètres qui permettent de surveiller l'état de production/consommation dans le réseau de distribution électrique.

Comme illustré sur la figure 5, la première composante $P_f^{ref}$ est donc déterminée en fonction d'une valeur mesurée de la fréquence du réseau de distribution électrique. Par exemple, la première composante de puissance $P_f^{ref}$ peut être déterminée comme étant inversement proportionnelle à une différence entre la valeur mesurée de la fréquence du réseau de distribution électrique et la valeur de fréquence nominale prédéfinie.

La deuxième composante de puissance $P_0^{ref}$ peut être déterminée en fonction d'une valeur demandée par le gestionnaire du réseau de distribution électrique, afin de répondre à une demande de puissance particulière. Par défaut, la deuxième composante de puissance $P_0^{ref}$ peut valoir 0.

La troisième composante de puissance $P_{SOC}^{ref}$ dépend de la moyenne des états de charge $SOC_i$ des dispositifs de stockage d'énergie électriques i activés. Par exemple, la troisième composante de puissance $P_{SOC}^{ref}$ peut être déterminée comme étant inversement proportionnelle à une différence entre une valeur moyenne $SOC_{avg}$ des états de charge $SOC_i$ des dispositifs de stockage d'énergie électriques i activés et une valeur moyenne de référence $SOC_{avg}^{ref}$.

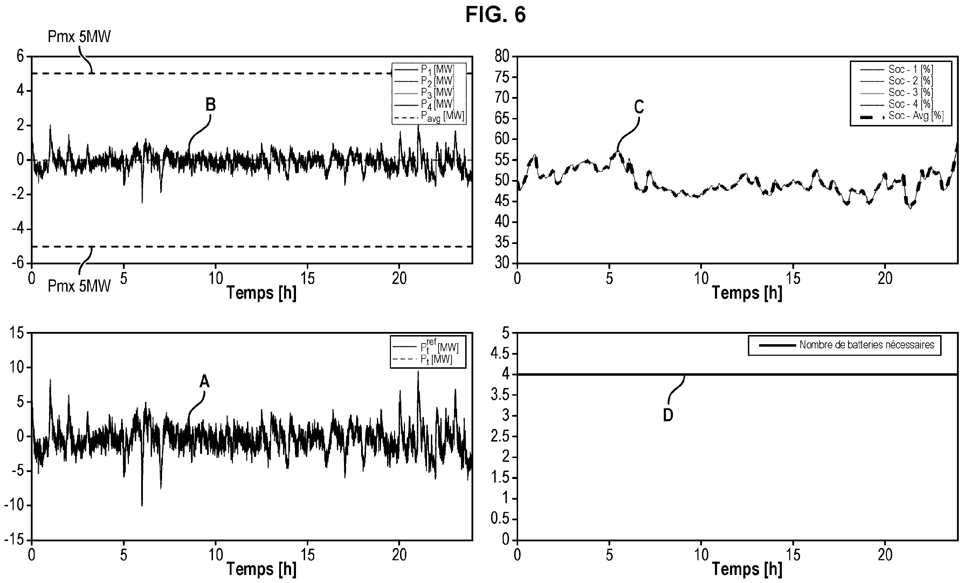

Sur la figure 6, la courbe A représente une variation de la puissance totale $P_t^{ref}$ demandée à l'ensemble des dispositifs de stockage d'énergie électrique au cours du temps.

Dans cet exemple, quatre dispositifs de stockage d'énergie électrique sont raccordés au point de raccordement commun.

La courbe B représente une variation de la fraction de la puissance demandée à chaque dispositif de stockage d'énergie électrique au cours du temps lorsqu'un procédé de pilotage classique, ne mettant pas en œuvre l'invention, est appliqué, en considérant quatre dispositifs de stockage d'énergie électrique raccordés au point de raccordement commun. Les dispositifs de stockage d'énergie électrique produisent chacun une fraction identique de la puissance demandée. De plus, la valeur de la puissance fournie par chaque dispositif de stockage d'énergie électrique est faible.

La courbe C représente les variations des états de charge des différents dispositifs de stockage d'énergie électrique au cours du temps obtenus avec le procédé de pilotage classique, ne mettant pas en œuvre l'invention. Dans un tel procédé de pilotage, les états de charge des différents dispositifs de stockage d'énergie électrique suivent des variations identiques. Les états de charge sont identiques au cours du temps.

La courbe D représente les états des différents dispositifs de stockage d'énergie électrique (activé ou désactivé) au cours du temps obtenus avec le procédé de pilotage classique, ne mettant pas en œuvre l'invention. Dans un tel procédé de pilotage, les dispositifs de stockage d'énergie électrique sont tous activé en permanence.

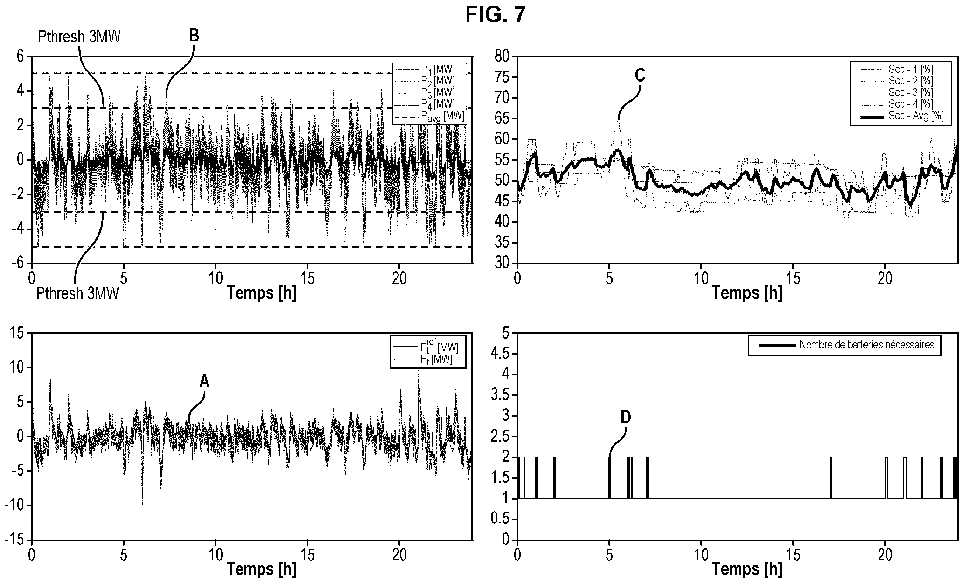

A titre de comparaison, sur la figure 7, la courbe A représente une variation de la puissance totale demandée à l'ensemble des dispositifs de stockage d'énergie électrique au cours du temps dans un procédé de pilotage conforme à un mode de réalisation de l'invention.

Dans cet exemple, quatre dispositifs de stockage d'énergie électrique sont raccordés au point de raccordement commun.

La courbe B représente les variations des différentes fractions de la puissance demandée aux différents dispositifs de stockage d'énergie électrique au cours du temps dans le procédé de pilotage conforme un mode de réalisation de l'invention. Les puissances fournies par les différents dispositifs de stockage d'énergie électrique sont différentes. De plus, la puissance fournie par chaque dispositif de stockage d'énergie électrique varie avec une amplitude bien supérieure à l'amplitude de variation de la puissance fournie dans le cas d'un procédé de pilotage classique.

La courbe C représente les variations des états de charge des différents dispositifs de stockage d'énergie électrique au cours du temps dans le procédé de pilotage conforme à un mode de réalisation de l'invention. Dans un tel procédé de pilotage, les états de charge des différents dispositifs de stockage d'énergie électrique ne sont pas identiques au cours du temps, mais varient de manière à ce que les différences entre les états de charge des dispositifs de stockage d'énergie électrique restent comprises dans une gamme de valeurs prédéfinie.

La courbe D représente les états des dispositifs de stockage d'énergie électrique (activé ou désactivé) au cours du temps dans le procédé de pilotage conforme à un mode de réalisation de l'invention. Dans un tel procédé de pilotage, les dispositifs de stockage d'énergie électrique ne sont pas activés en permanence. Le nombre de dispositifs de stockage d'énergie électrique activé change au cours du temps en fonction de la valeur de la puissance totale demandée au point de raccordement commun.

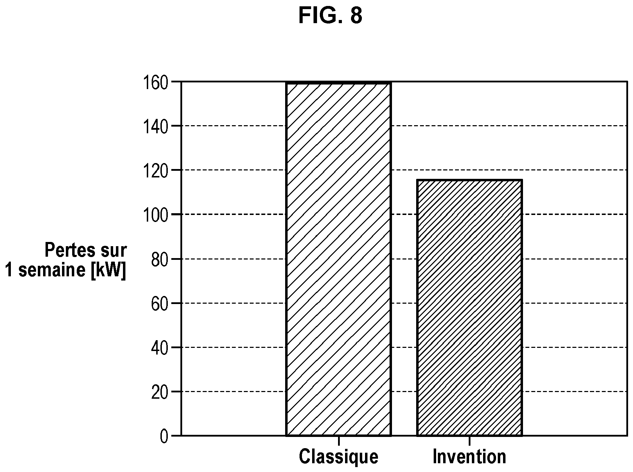

La figure 8 est un diagramme représentant de manière schématique le niveau des pertes électriques pour un procédé de pilotage classique, ne mettant pas en œuvre l'invention (Classique), et pour un procédé de pilotage conforme à un mode de réalisation de l'invention (Invention). Dans cet exemple, le procédé de pilotage conforme à un mode de réalisation de l'invention permet de réduire les pertes électriques des onduleurs de 28% par rapport au procédé de pilotage classique, ne mettant pas en œuvre l'invention.

Sur la figure 9, un cycle de charge et de décharge, visible sur la courbe C, est imposé à l'un des dispositifs de stockage d'énergie électrique choisi parmi l'ensemble des dispositifs de stockage d'énergie électrique. Au cours du cycle de charge et de décharge, de l'énergie électrique est transférée entre le dispositif de stockage d'énergie électrique choisi et les autres dispositifs de stockage d'énergie électrique.

Pendant le cycle de charge et de décharge, une valeur de la capacité du dispositif de stockage d'énergie électrique choisi est déterminée, afin de recalibrer un estimateur de l'état de charge du dispositif de stockage d'énergie électrique. De manière connue, l'état de charge du dispositif de stockage d'énergie électrique est déterminé en fonction des variations de paramètres électriques mesurés au cours du temps, pendant le cycle de charge et de décharge. Les paramètres électriques mesurés sont un courant électrique délivré par le dispositif de stockage d'énergie électrique, une tension aux bornes du dispositif de stockage d'énergie électrique et une température du dispositif de stockage d'énergie électrique.

Le cycle de charge et de décharge est imposé au dispositif de stockage d'énergie électrique choisi pendant qu'un procédé de pilotage conforme à un mode de réalisation de l'invention est appliqué aux autres dispositifs de stockage d'énergie électrique.

Comme cela apparaît sur la figure 9, le procédé de pilotage s'adapte automatiquement aux variations additionnelles des états de charges des dispositifs de stockage d'énergie électriques dues au transfert d'énergie électrique entre le dispositif de stockage d'énergie électrique en cours de calibration et les autres dispositifs de stockage d'énergie électrique. Ainsi, le procédé permet de charger et de décharger un dispositif de stockage d'énergie électrique choisi sans perturber la puissance électrique fournie au point de raccordement commun.

**Revendications**

1. Procédé de pilotage de charge et de décharge d'une pluralité de dispositifs de stockage d'énergie électrique raccordés à un point de raccordement commun (PCC) d'un réseau de distribution électrique, en fonction d'une variation d'une valeur de puissance demandée ( $P_t^{ref}$ ) au point de raccordement commun, chaque dispositif de stockage d'énergie électrique ($i$) présentant un état de charge instantané ($SOC_i$) respectif, comprenant des étapes de :

   - a - déterminer un nombre de dispositifs de stockage d'énergie électrique nécessaire ($N_{needed}$) pour fournir la valeur de puissance demandée à un instant t, le nombre de dispositifs de stockage d'énergie électrique nécessaire ($N_{needed}$) étant déterminé de telle sorte que :

      ■ si la valeur de puissance demandée diminue, le nombre de dispositifs de stockage d'énergie électrique nécessaire ($N_{needed}$) est le nombre N maximal de dispositifs de stockage d'énergie électrique, tel que la valeur de puissance demandée divisée par le nombre N est supérieur à un premier seuil de puissance prédéfini (*threshold OFF*), et
      ■ si la valeur de puissance demandée augmente, le nombre de dispositifs de stockage d'énergie électrique nécessaire ($N_{needed}$) est le nombre N minimal de dispositifs de stockage d'énergie électrique, tel que la valeur de puissance demandée divisée par le nombre N est inférieur à un deuxième seuil de puissance prédéfini *(threshold ON),*

   - b - activer et/ou désactiver un ou plusieurs des dispositifs de stockage d'énergie électrique, en fonction du nombre de dispositifs de stockage d'énergie électrique nécessaire ($N_{needed}$) déterminé, et des valeurs des états de charge instantanés ($SOC_i$) de chacun des dispositifs de stockage d'énergie électrique ($i$), et

   - c - répartir la puissance demandée ( $P_t^{ref}$ ) entre les dispositifs de stockage d'énergie électrique activés.

2. Procédé selon la revendication 1, dans lequel le deuxième seuil de puissance prédéfini *(threshold ON)* est supérieur au premier seuil de puissance *(threshold OFF).*

3. Procédé selon l'une des revendications 1 et 2, dans lequel l'étape b comprend des sous-étapes de :

   - d - si la valeur de puissance demandée est positive, déterminer une valeur d'état de charge instantanée maximale parmi les valeurs d'état de charge ($SOC_i$) des dispositifs de stockage d'énergie électrique,
   - e - comparer la valeur d'état de charge instantané ($SOC_i$) de chaque dispositif de stockage d'énergie électrique avec la valeur d'état de charge instantanée maximale,

- f - sélectionner les dispositifs de stockage d'énergie électrique susceptibles d'être activés, comme étant les dispositifs de stockage d'énergie électrique qui présentent un état de charge instantané supérieur à la valeur d'état de charge instantanée maximale moins une première valeur de tolérance prédéfinie ($SOC_{tol}$).

4. Procédé selon l'une des revendications 1 à 3, dans lequel l'étape b comprend des sous-étapes de :

- g - si la valeur de puissance demandée est négative, déterminer une valeur d'état de charge instantanée minimale parmi les valeurs d'état de charge ($SOC_i$) des dispositifs de stockage d'énergie électrique,
- h - comparer la valeur d'état de charge instantané ($SOC_i$) de chaque dispositif de stockage d'énergie électrique avec la valeur d'état de charge instantanée minimale,
- i - sélectionner les dispositifs de stockage d'énergie électrique susceptibles d'être activés, comme étant les dispositifs de stockage d'énergie électrique qui présentent un état de charge instantané inférieur à la valeur d'état de charge instantanée minimale plus une deuxième valeur de tolérance prédéfinie ($SOC_{tol}$).

5. Procédé selon l'une des revendications 3 et 4, dans lequel l'étape b comprend en outre des sous-étapes de :

- j - déterminer un nombre de dispositifs de stockage d'énergie électrique susceptibles d'être activés ($N_{active}$),
- k - comparer le nombre de dispositifs de stockage d'énergie électrique susceptibles d'être activés ($N_{active}$) avec le nombre de dispositifs de stockage d'énergie électrique nécessaire ($N_{needed}$), et
- l - si le nombre de dispositifs de stockage d'énergie électrique susceptibles d'être activés ($N_{active}$) est égal au nombre de dispositifs de stockage d'énergie électrique nécessaire ($N_{needed}$), activer les dispositifs de stockage d'énergie électrique susceptibles d'être activés,
- m - si le nombre de dispositifs de stockage d'énergie électrique susceptibles d'être activés ($N_{active}$) est supérieur au nombre de dispositifs de stockage d'énergie électrique nécessaire ($N_{needed}$), activer une partie seulement des dispositifs de stockage d'énergie électrique susceptibles d'être activés,
- o - si le nombre de dispositifs de stockage d'énergie électrique susceptibles d'être activés ($N_{active}$) est inférieur au nombre de dispositifs de stockage d'énergie électrique nécessaire ($N_{needed}$), activer les dispositifs de stockage d'énergie électrique susceptibles d'être activés et un ou plusieurs dispositifs de stockage d'énergie électrique additionnels.

6. Procédé selon la revendication 5, dans lequel, dans le cas où le nombre de dispositifs de stockage d'énergie électrique susceptibles d'être activés ($N_{active}$) est supérieur au nombre de dispositifs de stockage d'énergie électrique nécessaire ($N_{needed}$), l'étape m comprend :

- si la valeur de puissance demandée est négative, activer les dispositifs de stockage d'énergie électrique présentant les valeurs d'état de charge les moins élevées, parmi les dispositifs de stockage d'énergie électrique susceptibles d'être activés,
- si la valeur de puissance demandée est positive, activer les dispositifs de stockage d'énergie électrique présentant les valeurs d'état de charge les plus élevées, parmi les dispositifs de stockage d'énergie électrique susceptibles d'être activés.

7. Procédé selon l'une des revendications 5 et 6, dans lequel, dans le cas où le nombre de dispositifs de stockage d'énergie électrique susceptibles d'être activés ($N_{active}$) est inférieur au nombre de dispositifs de stockage d'énergie électrique nécessaire ($N_{needed}$), l'étape o comprend :

- si la valeur de puissance demandée est négative, activer les dispositifs de stockage d'énergie électrique susceptibles d'être activés, ainsi qu'un ou plusieurs dispositifs de stockage d'énergie électrique additionnels présentant les valeurs d'état de charge les moins élevées parmi les dispositifs de stockage d'énergie électrique qui n'a (ont) pas été sélectionné(s) en tant que dispositif(s) de stockage d'énergie électrique susceptible(s) d'être activé(s),
- si la valeur de puissance demandée est positive, activer les dispositifs de stockage d'énergie électrique susceptibles d'être activés, ainsi qu'un ou plusieurs dispositifs de stockage d'énergie électrique additionnels présentant les valeurs d'état de charge les plus élevées parmi les dispositifs de stockage d'énergie électrique qui n'a (ont) pas été sélectionné(s) en tant que dispositif(s) de stockage d'énergie électrique susceptible(s) d'être activé(s).

8. Procédé selon l'une des revendications 5 à 7, dans lequel les étapes j à o sont répétées au cours du temps, de manière à activer et/ou désactiver au fur et à mesure des variations des valeurs des états de charge des dispositifs de stockage d'énergie électrique.

9. Procédé selon l'une des revendications 1 à 8, comprenant une étape de :

   - p - appliquer un cycle de charge et de décharge à un dispositif de stockage d'énergie électrique choisi parmi la pluralité de dispositifs de stockage d'énergie électrique, de sorte qu'au cours du cycle de charge et de décharge, de l'énergie électrique est transférée entre le dispositif de stockage d'énergie électrique choisi et les autres dispositifs de stockage d'énergie électrique,
   - q - mesurer une capacité du dispositif de stockage d'énergie électrique choisi, en fonction de variations de paramètres électriques du dispositif de stockage d'énergie électrique mesurés au cours du temps pendant le cycle de charge et de décharge, et

   dans lequel les étapes a à c sont appliquées à la pluralité de dispositifs de stockage d'énergie électrique, à l'exception du dispositif de stockage d'énergie électrique choisi.

10. Produit programme d'ordinateur comprenant des instructions de code de programme pour l'exécution des étapes d'un procédé de pilotage conforme à l'une des revendications 1 à 9, lorsque ce programme est exécuté par un ordinateur.

11. Dispositif de pilotage de charge et de décharge d'une pluralité de dispositifs de stockage d'énergie électrique raccordés à un point de raccordement commun (PCC) d'un réseau de distribution électrique, comprenant un processeur et une mémoire dans laquelle est enregistré un programme comprenant des instructions pour la mise en œuvre par le processeur d'un procédé de pilotage conforme à l'une des revendications 1 à 9.

EP 4 191 814 A1

# FIG. 1

## FIG. 2

EP 4 191 814 A1

# FIG. 3A

Déterminer un nombre de dispositifs de stockage d'énergie électrique nécessaire ($N_{needed}$) — 1

Trier les dispositifs de stockage d'énergie électrique en fonction de leur état de charge ($SOC_i$) — 2

Puissance totale demandée positive ? — 3

4   OUI        NON   7

Pour i = 1...n : $SOC_i > \max(SOC_i) - SOC_{tol}$ ?

Pour i = 1...n : $SOC_i < \min(SOC_i) + SOC_{tol}$ ?

NON    5   OUI      NON   9    OUI

Dispositif de stockage d'énergie i = susceptible d'être activé

Dispositif de stockage d'énergie i = désactivé

6

Dispositif de stockage d'énergie i = désactivé

8

Dispositif de stockage d'énergie i = susceptible d'être activé

Mise à jour de $N_{active}$

10

# FIG. 3B

Puissance totale demandée positive ? — 3

OUI — 11

$N_{active} < N_{needed}$ ?

NON

OUI — 12

Activer des dispositifs de stockage d'énergie électrique additionnels

13

Désactiver les dispositifs de stockage d'énergie électrique les moins chargés

NON — 11

$N_{active} < N_{needed}$ ?

NON — 15

Désactiver les dispositifs de stockage d'énergie électrique les plus chargés

OUI

14

Activer des dispositifs de stockage d'énergie électrique additionnels

# FIG. 4

N nécessaire

2

1

0

Puissance

$P_t^{ref}$

Threshold ON

Threshold OFF

Puissance batterie 1

Puissance batterie 2

Activer batterie 2   Désactiver batterie 1

FIG. 5

EP 4 191 814 A1

FIG. 6

FIG. 7

EP 4 191 814 A1

# FIG. 8

**FIG. 9**

Europäisches
Patentamt

European
Patent Office

Office européen
des brevets

# RAPPORT DE RECHERCHE EUROPEENNE

**Numéro de la demande**

**EP 22 21 1217**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 2016/075254 A1 (CHANG HSIN-YUAN [TW] ET AL) 17 mars 2016 (2016-03-17) * le document en entier * ----- | 1-11 | INV.<br>H02J3/32<br>H02J3/46<br>H02J7/00 |
| Y | US 2016/334821 A1 (LEE JIN HO [KR] ET AL) 17 novembre 2016 (2016-11-17) * le document en entier * ----- | 1-11 | |
| A | US 2017/077706 A1 (TRIEBEL CLEMENS [DE] ET AL) 16 mars 2017 (2017-03-16) * le document en entier * ----- | 1-11 | |

**DOMAINES TECHNIQUES RECHERCHES (IPC)**

**H02J**

Le présent rapport a été établi pour toutes les revendications

| Lieu de la recherche | Date d'achèvement de la recherche | Examinateur |
|---|---|---|
| Munich | 6 février 2023 | Hunckler, José |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
 
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

**EP 22 21 1217**

**06−02−2023**

| Document brevet cité au rapport de recherche | Date de publication | Membre(s) de la famille de brevet(s) | Date de publication |
|---|---|---|---|
| US 2016075254 A1 | 17−03−2016 | CA 2911036 A1 | 06−11−2014 |
| | | CN 105324677 A | 10−02−2016 |
| | | EP 2993483 A1 | 09−03−2016 |
| | | JP 6185150 B2 | 23−08−2017 |
| | | JP 2016524435 A | 12−08−2016 |
| | | KR 20160003194 A | 08−01−2016 |
| | | TW 201443794 A | 16−11−2014 |
| | | US 2016075254 A1 | 17−03−2016 |
| | | WO 2014177063 A1 | 06−11−2014 |
| US 2016334821 A1 | 17−11−2016 | KR 20150080169 A | 09−07−2015 |
| | | US 2016334821 A1 | 17−11−2016 |
| | | WO 2015102396 A1 | 09−07−2015 |
| US 2017077706 A1 | 16−03−2017 | DE 102014210010 A1 | 26−11−2015 |
| | | EP 3149826 A1 | 05−04−2017 |
| | | US 2017077706 A1 | 16−03−2017 |
| | | WO 2015181147 A1 | 03−12−2015 |

EPO FORM P0460